# FASCICULE DE BREVET EUROPEEN

(11) **EP 2 144 781 B1**
(45) Date de publication et mention de la délivrance du brevet: **27.10.2010**
(21) Numéro de dépôt: 08805729.4
(22) Date de dépôt: 30.04.2008
(51) Int. Cl.: B60K 37/02, G02B 27/00

(54) **VITRE POUR PLANCHE DE BORD DE VEHICULE**
SCHEIBE FÜR EIN FAHRZEUGARMATURENBRETT
GLASS FOR A VEHICLE DASHBOARD

(30) Priorité: 14.05.2007 FR 0755047
(43) Date de publication de la demande: 20.01.2010
(73) Titulaire: Renault S.A.S., 92100 Boulogne-Billancourt (FR)
(72) Inventeur: LECOMTE, David, F-78210 Saint-Cyr-L'Ecole (FR); GILLET, Didier, F-93200 Saint-Denis (FR)
(74) Mandataire: Religieux, Vincent
(86) Numéro de dépôt international: PCT/FR2008/050775
(87) Numéro de publication internationale: WO 2008/148980

(56) Documents cités:
- EP-A- 0 482 805
- FR-A- 2 721 865
- US-A1- 2004 189 483

## Description

L'invention concerne le domaine des vitres pour planche de bord de véhicule automobile. En particulier, l'invention concerne le domaine des vitres de groupe recouvrant plusieurs appareils disposés dans la planche de bord tels que des indicateurs de vitesse, des compte-tours, etc.

Généralement, les planches de bord sont équipées d'une visière au-dessus des instruments qui protège le conducteur des reflets du soleil que la vitre pourrait renvoyer vers le conducteur.

Certaines visières sont dites « fermées ». Celles-ci s'avancent vers le conducteur, non seulement au-dessus des instruments mais également sur les côtés. Elles sont efficaces contre les reflets. D'autres visières sont dites « ouvertes ». Elles présentent l'avantage de laisser voir les instruments de bord depuis les autres sièges du véhicule. Il est cependant particulièrement difficile de garantir l'absence de reflets du soleil vers le conducteur dans le cas de visière ouverte.

Le brevet US 5 997 161 (General Motors Corporation) décrit une planche de bord équipée d'une vitre de groupe asphérique dont la concavité globale est tournée vers le bas du véhicule. Cela présente l'inconvénient que l'oeil de l'observateur perçoit une image des instruments de la planche de bord par des faisceaux lumineux traversant ladite vitre en incidence quasi rasante. Cela déforme l'image perçue par le conducteur.

La demande de brevet FR 2 721 865 (RENAULT) décrit une planche de bord équipée d'un afficheur dont l'image est réfléchie sur la vitre de planche de bord. La vitre présente une forme tronconique.

Le document EP-A-O 482805 décrit une vitre galbée selon le préambule de la revendication 1.

L'invention propose une vitre galbée pour planche de bord, une planche de bord équipée de ladite vitre et un procédé de définition d'un galbe de la vitre qui permet de maîtriser la susceptibilité de la vitre à présenter des reflets vers le conducteur, notamment dans le cas de visière ouverte.

Selon un mode de réalisation, la vitre galbée pour planche de bord de véhicule automobile comprend un moyen de positionnement de la vitre par rapport à la planche de bord du véhicule et par rapport à un point de référence, représentatif d'un point haut d'observation. Un axe de référence, destiné à être vertical lorsque la vitre est assemblée sur le véhicule, comprend le point de référence. La vitre comprend une portion principale présentant des sections partiellement elliptiques dans des plans de section verticaux comprenant l'axe de référence. Chacune des sections elliptiques présente un premier foyer situé au point de référence de la vitre.

Les rayons réfléchis sur la vitre et parvenant au point haut d'observation, se propagent dans un des plans de section contenant l'axe de référence. Le rayon réfléchi provient d'un rayon incident dont la projection sur le plan de section ne peut provenir que d'une zone proche d'un deuxième foyer de la section elliptique. De plus, les conducteurs ayant les yeux situés au dessus de la planche de bord pour voir la route, les deux foyers de l'ellipse sont au dessus de la vitre. Le point de référence de la vitre étant au dessus des yeux des conducteurs potentiels, les rayons incidents, susceptibles de rejoindre l'oeil d'un conducteur, sont plus en avant que ceux se réfléchissant vers le point de référence, et donc en avant du deuxième foyer de la section elliptique. La forme elliptique de la portion principale de la vitre permet de maîtriser les rayons incidents susceptibles de se réfléchir vers les yeux des conducteurs et de les intercepter par une visière.

De plus, la concavité de la vitre étant dirigée vers le haut, les rayons traversant la vitre vers l'oeil du conducteur sont plus proches de la normale de la vitre que dans une vitre à concavité est dirigée vers le bas. L'image transmise par la vitre est moins déformée.

Selon une variante, les normales à la surface de la portion principale du côté de l'habitacle sont orientées latéralement par rapport au plan de section vers un demi-plan avant médian, le demi-plan avant médian étant limité par et comprenant l'axe de référence et étant situé vers l'avant du véhicule lorsque la vitre est assemblée sur le véhicule.

Autrement dit, vu de dessus, en projection sur un plan horizontal, des rayons réfléchis par la vitre vers le point de référence sont moins inclinés par rapport au plan médian de la vitre que les rayons incidents correspondants. Cela permet de réduire la susceptibilité de la vitre à présenter des reflets. En d'autres termes, une visière masquant les reflets sur la vitre peut être de taille plus réduite.

Selon encore une variante, les sections elliptiques sont chacune tangentes à un gabarit présentant une surface de révolution autour d'un axe de gabarit, parallèle à l'axe de référence et situé dans un demi-plan arrière médian, le demi-plan arrière médian étant délimité par et comprenant l'axe de référence et étant situé vers l'arrière du véhicule lorsque la vitre est assemblée sur le véhicule.

Grâce à la courbure du gabarit autour de l'axe de gabarit, la vitre présente des sections dans un plan horizontal ayant également une certaine courbure de part et d'autre du plan médian. Les normales de la vitre aux points d'incidences sont orientées vers le plan médian. Cela permet de modifier la convergence du faisceau réfléchi et d'agir sur les reflets perçus par le conducteur.

Avantageusement, le gabarit est un cône.

Avantageusement, l'axe de gabarit est confondu avec l'axe de référence.

Selon une variante, la vitre comprend une portion secondaire de raccordement en continuité de tangence avec la portion principale et dans laquelle la portion de raccordement présente une inclinaison par rapport à la verticale, supérieure à un seuil.

Autrement dit, la portion d'ellipse risquant d'être trop verticale a été éliminée et remplacée par la portion secondaire. Cela permet que l'interception des rayons incidents susceptibles de se réfléchir vers le point de référence ne soit pas trop rasant par rapport à la visière. Cela évite qu'un conducteur regardant sous la visière ne se voit dans la partie haute de la vitre. D'une manière générale, cela élimine des réflexions parasites et permet de conserver la suppression des reflets malgré une certaine tolérance de positionnement relatif entre la visière et la vitre.

Selon un autre aspect, l'invention porte sur une planche de bord de véhicule automobile équipée d'une vitre et d'une visière située au moins en partie au dessus de la vitre, dans laquelle les sections elliptiques présentent chacune un second foyer situé sur une surface inférieure de la visière.

Selon une variante, les sections elliptiques présentent chacune un second foyer situé à la hauteur d'un bord extrême médian de la visière et radialement plus éloigné de l'axe de référence que ledit bord extrême médian.

Cela permet d'accentuer l'ellipticité des sections elliptiques latérales situées sur les côtés extérieurs de la vitre par rapport au plan médian. Cela accentue la courbure des sections horizontales de la vitre vers les côtés latéraux de la vitre. Cela permet de contrôler les rayons incidents susceptibles de parvenir au point d'observation haut et de les masquer avec une visière adaptée. Inversement, cela permet d'adapter la vitre à une visière donnée.

Selon encore un autre aspect de l'invention, celle-ci porte sur un procédé de définition d'un galbe de vitre de planche de bord de véhicule automobile, comprenant une étape de construction d'une famille d'ellipses dans des plans verticaux contenant un point haut d'observation du conducteur, chacune des ellipses ayant le point haut d'observation comme foyer et une étape de raccordement surfacique des portions principales de chacune des ellipses.

Selon une variante, le procédé convient pour adapter la vitre à une visière donnée de planche de bord. L'étape de construction de la famille d'ellipses comprend une étape de définition d'un gabarit global de la famille d'ellipses sur lequel chaque ellipse est tangente, et une étape de positionnement des seconds foyers de chaque ellipse sur une surface inférieure de ladite visière.

Pour un rayon incident non masqué par la visière, il est possible de modifier la normale au point d'incidence de manière que le rayon réfléchi ne puisse parvenir à l'oeil d'un conducteur. La modification du second foyer de l'ellipse permet de modifier la normale au point d'incidence vue dans le plan de section. La modification de la courbure du gabarit permet de modifier la normale au point d'incidence vue dans un plan horizontal. Grâce aux deux degrés de liberté que sont le choix des positions de second foyer et le choix de la position de l'axe de gabarit, il est possible d'adapter la vitre à la visière même si celle-ci est de type visière ouverte.

D'autres caractéristiques et avantages de l'invention apparaîtront à la lecture de la description détaillée de quelques modes de réalisation pris à titre d'exemples non limitatifs et illustrés par les dessins annexés, sur lesquels :
- les figures 1 et 2 sont une illustration d'une planche de bord et d'un point haut d'observation dans un véhicule ;
- la figure 3 est une vue de dessus d'une visière de planche de bord ;
- la figure 4 est une épure vue de dessus de la définition du galbe de la vitre selon l'invention ;
- la figure 5 est une épure en coupe selon le plan V-V de la figure 4 ; et
- la figure 6 est une épure en coupe selon le plan VI-VI de la figure 4.

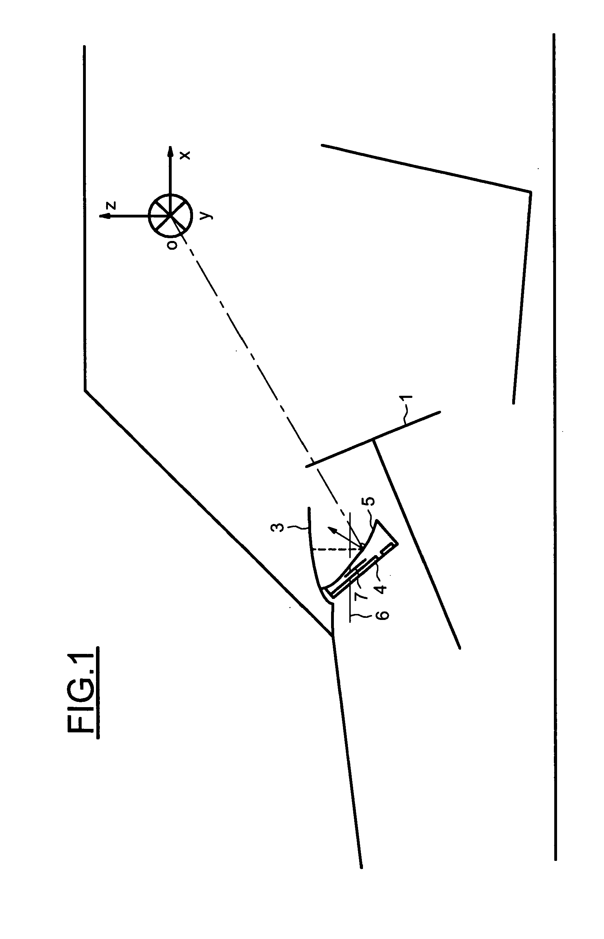

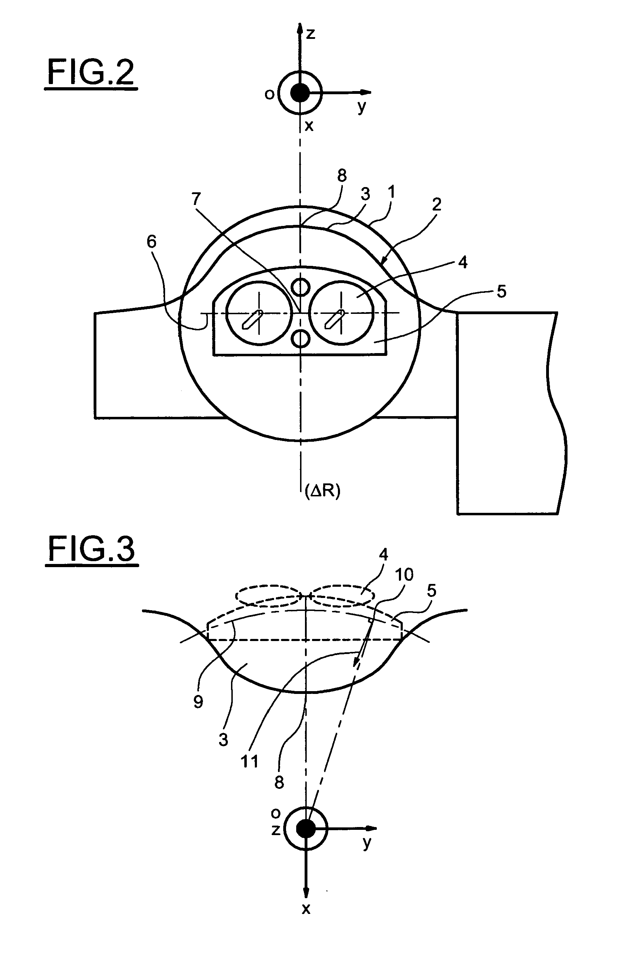

Comme illustré sur les figures 1 et 2, le véhicule comprend au dessus du volant 1, une planche de bord 2 comportant une visière 3, des compteurs 4, et une vitre de groupe 5 recouvrant l'ensemble des compteurs 4. Un plan horizontal 6 passe par un centre de compteur 7. Un trièdre de référence (Oxyz) comprend en son origine un point « O » situé à la hauteur maximum que sont susceptibles d'occuper les yeux d'un échantillon représentatif de conducteur. Le plan (xOz) est un plan médian vertical et longitudinal situé latéralement au milieu d'un poste de conduite L'axe (Ox) est horizontal dirigé dans l'axe du véhicule en direction de l'arrière du véhicule. L'axe (Oy) est horizontal transversal par rapport au véhicule et dirigé vers la droite du véhicule, et l'axe Oz est vertical passant par le point « O » de référence. L'axe (Oz) est l'axe de référence (Oz) servant à la construction de la vitre 5 de la planche de bord 2. Le point « O » du trièdre de référence est situé selon les véhicules, entre 30 cm et 40 cm, de préférence environ 34 cm au-dessus du centre 7 du compteur 4, et entre 60 cm et 110 cm et de préférence entre 72 cm et 83 cm en arrière du centre 7.

Comme illustré sur la figure 3, la visière 3 s'étend au dessus de la vitre de groupe 5 et des compteurs 4 et présente un bord extrême médian 8 situé le plus proche du conducteur dans le plan médian (xOz). La vitre de groupe 5 est illustrée en pointillés ainsi que les compteurs 4.

Une ligne en traits mixtes illustre une section horizontale 9 de la vitre 5 dans le plan horizontal 6. La vitre 5 présente une normale 11 à l'endroit d'un point 10 de la section horizontale 9. Un des objets de l'invention est de déterminer le galbe de la vitre 5 de manière que aucun rayon lumineux ne puisse atteindre le point 10 avec une incidence telle qu'il puisse être réfléchi vers le point « O » et provoquer un reflet sur la vitre perturbant le conducteur. Les rayons incidents peuvent provenir du soleil mais également de n'importe quel point de l'habitacle ou du conducteur susceptible de réfléchir de la lumière en direction de la planche de bord 2.

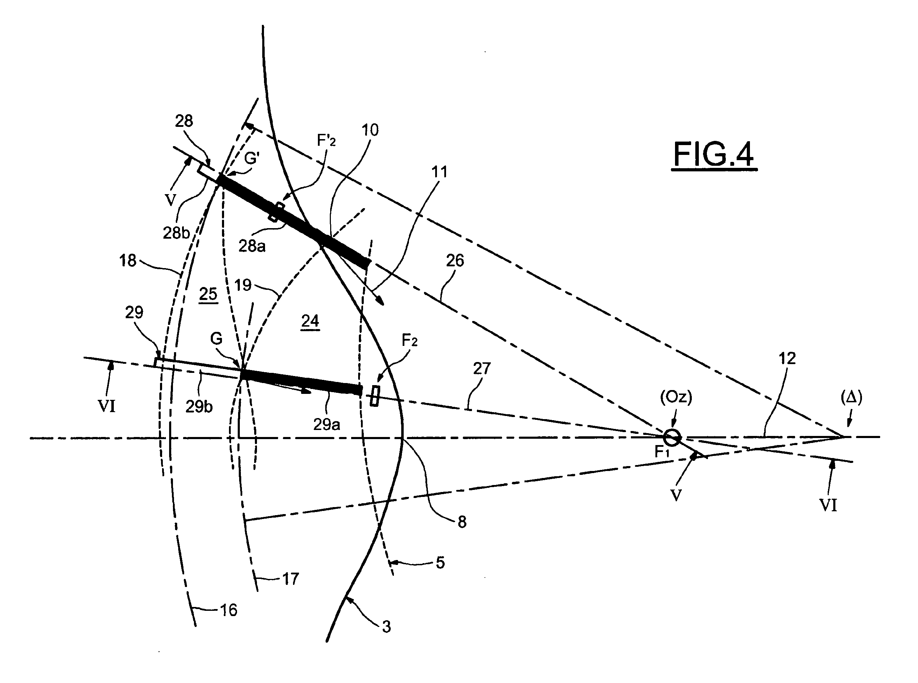

On va maintenant décrire à l'aide des figures 4 à 6 un procédé de définition du galbe de la vitre 5. Les références précédemment décrites s'appliquent également à ces figures. La figure 4 illustre trois pans de section verticaux comprenant l'axe de référence (Oz). Le plan médian (xOz) correspond à un plan de symétrie de la vitre 5. Le plan V-V est un plan de section 26 situé angulairement vers l'extérieur de la vitre 5 et de la visière 3. Le plan VI-VI est également un plan de section 27 situé angulairement au voisinage du plan médian (xOz).

La vitre 5 présente une section 28 dans le plan de section 26 et une section 29 dans le plan de section 27. Les sections 28 et 29 sont représentées par un rectangle dont les parties noircies illustrent des portions elliptiques 28a et 29a et les parties blanches illustrent des portions rectilignes 28b et 29b.

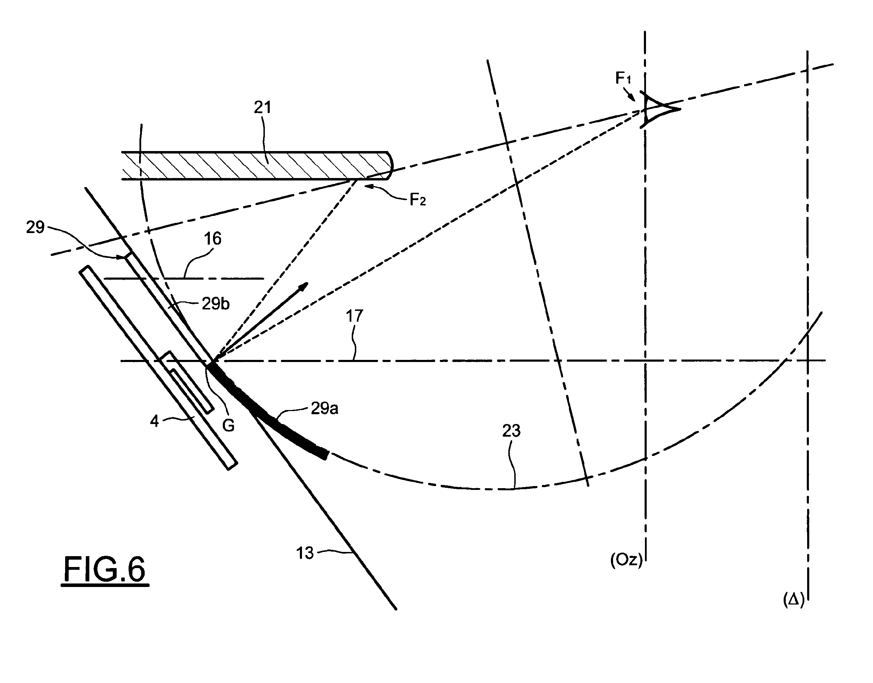

Un axe (Δ), parallèle à l'axe de référence (Oz), est situé dans un demi-plan arrière médian 12. Un gabarit 13 présente une forme conique autour de l'axe de gabarit (Δ) et un angle au sommet correspondant à l'inclinaison du compteur 4 comme illustré sur la figure 6.

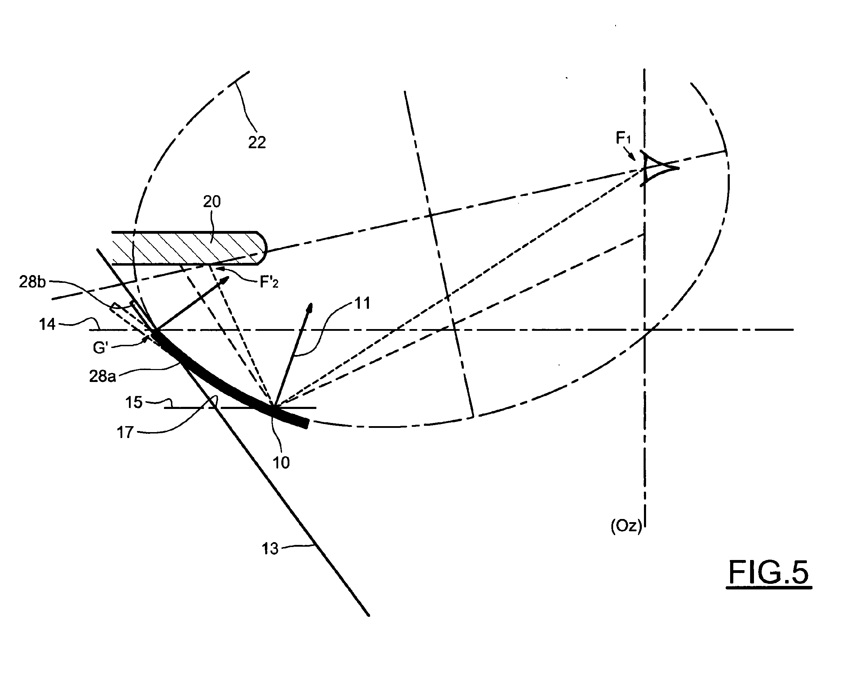

Un premier plan de coupe 14 et un deuxième plan de coupe 15 sont horizontaux et visibles sur les figures 5 et 6. Les arcs de cercle mixtes fins de la figure 4 illustrent les sections 16 et 17 respectivement du gabarit 13 dans le premier plan de coupe 14 et le deuxième plan de coupe 15. Les lignes pointillées 18, 19 illustrent les sections de la vitre 5 respectivement selon le premier plan de coupe 14 et le deuxième plan de coupe 15.

Comme illustré sur la figure 5, la visière 3 présente une section 20 dans le plan 26 qui peut être située à une hauteur différente de la section 21 dans le plan 27. Un premier foyer F1 est situé au point « O » de référence de la vitre, représentatif d'un point haut d'observation. Un second foyer F2' est positionné sur la surface inférieure de la section 20. Une ellipse 22 est déterminée par les premier et second foyers F1 et F2' et par le fait que l'ellipse 22 est tangente au cône du gabarit 13. Le point G' est le point de tangence entre l'ellipse 22 et le gabarit 13.

Dans une variante, la frontière entre la partie elliptique 28a et la partie rectiligne 28b correspond au point G' de construction de l'ellipse 20.

Dans une autre variante, la partie rectiligne 28b pourrait n'être pas confondue avec le cône de gabarit 13 et pourrait être plus inclinée par rapport à la verticale. La transition entre la partie elliptique 18a et rectiligne 18b ne coïnciderait alors pas avec le point G' de construction de l'ellipse 20, ainsi qu'illustrée en pointillés sur la figure 5. Cette variante permet de réduire le galbe en partie haute de la vitre 5 dans un endroit bien protégé par la visière 3 et de réduire l'encombrement à cet endroit de l'ensemble comprenant le compteur 4 et la vitre 5.

Selon l'un ou l'autre des variantes ci-dessus, la manière de construire l'ellipse 20 permet de garantir que les rayons lumineux parvenant au point haut d'observation ne peuvent que provenir d'un rayon incident dont la projection sur le plan de section 26 est issue du point F2', comme illustré en pointillés courts sur la figure 5. On a illustré en pointillés longs sur la figure 5 le cas d'un rayon lumineux susceptible de rencontrer l'oeil d'un conducteur plus petit. Dans ce cas, le faisceau incident correspondant présente une projection sur le plan 26 dont l'origine est en avant du point F2'.

Comme illustré sur la figure 6, une ellipse 23 est construite de la même manière que l'ellipse 22 en définissant un point F2 sur une surface inférieure de la section 21 de la visière 3. L'ellipse 23 présente comme foyer, le premier foyer F1, commun à l'ensemble des ellipses, et le foyer F2, et est tangente au cône de gabarit 13. La portion rectiligne 29b est un prolongement dans le plan 27 à partir du point G de la tangente de la portion elliptique 29a.

Dans le cas de véhicules ayant une planche de bord 2 horizontale, les sections 20 et 21 pourraient être identiques, de même la longueur d'avancée de la visière au dessus du compteur 4 pourrait également être identique. Dans tous les cas, le second foyer F2 ou F2' est déterminé au voisinage de l'extrémité de la section 20 ou 21 correspondante.

L'ensemble des portions elliptiques 28a et 29a sont raccordées numériquement entre elles et forment une portion principale 24 de la vitre 5. L'ensemble des portions rectilignes 28b et 29b sont raccordées numériquement entre elles et forment une portion secondaire 25 de la vitre 5. De cette manière, la vitre présente en tous points un angle par rapport à la verticale supérieur à un angle seuil. Cet angle permet que la visière 3 continue de masquer les reflets sur la vitre 5 malgré les tolérances de positionnement angulaire de la vitre 5 par rapport à la visière 3. Cette tolérance de positionnement peut être étendue car généralement la vitre 5 est fixée sur le compteur 4, lui-même fixé sur un châssis alors que la planche de bord 2 est directement fixée sur le véhicule.

La figure 4 permet d'illustrer un avantage de ce procédé de définition du galbe de la vitre 5. Pour un véhicule donné, la position de l'axe de référence (Oz) est fixée et la forme de la visière 3 est également fixée. Les seuls degrés de liberté pour déterminer le galbe sont la fixation de la distance entre l'axe de gabarit Δ et l'axe de référence (Oz), et la fixation pour chaque plan de coupe de la position des seconds foyers F2 et F2'. Lorsque l'angle du plan de coupe par rapport au plan médian (xOz) augmente, la distance entre le premier et le second foyer augmente également. Cela a comme effet d'accentuer l'ellipticité des ellipses situées sur les bords latéraux extérieurs de la vitre 5. Cela augmente le rayon de courbure horizontal de la section 17 située dans une partie inférieure de la vitre 5 par rapport au rayon de courbure de la section 16 située dans une partie haute de vitre 5.

La normale 11 au point d'incidence 10 présente un angle par rapport au plan de section correspondant orientée vers la partie médiane de la vitre 5, de sorte que les faisceaux susceptibles de rejoindre le premier foyer F1 sont interceptés par la visière 3 même si la visière 3 n'est pas immédiatement au dessus du point d'incidence 10 considéré. Cela permet de masquer les reflets sur une vitre 5 de planche de bord 2 même avec une visière 3 très ouverte et de petites dimensions.

## Revendications

1. Vitre galbée (5) pour planche de bord (2) de véhicule automobile comprenant un moyen de positionnement de la vitre par rapport à la planche de bord (2) du véhicule et par rapport à un point de référence (O) représentatif d'un point haut d'observation, un axe de référence (Oz), destiné à être vertical lorsque la vitre (5) est assemblée sur le véhicule, comprenant le point de référence (O) **caractérisée par le fait qu'**elle comprend une portion principale (24) présentant des sections partiellement elliptiques (28a, 29a) dans des plans de section (26, 27) verticaux comprenant l'axe de référence (Oz), chacune des sections elliptiques (28a, 29a) présentant un premier foyer (F1) situé au point de référence (O) de la vitre (5).

2. Vitre selon la revendication 1, dans laquelle les normales (11) à la surface de la portion principale (24) du côté de l'habitacle sont orientées latéralement par rapport au plan de section (26) vers un demi-plan avant médian (xOz), le demi-plan avant médian étant limité par et comprenant l'axe de référence (Oz) et étant situé vers l'avant du véhicule lorsque la vitre (5) est assemblée sur le véhicule.

3. Vitre selon la revendication 1 ou 2, dans laquelle les sections elliptiques (28a, 29a) sont chacune tangentes à un gabarit (13) présentant une surface de révolution autour d'un axe de gabarit (Δ), parallèle à l'axe de référence (Oz) et situé dans un demi-plan arrière médian (12), le demi-plan arrière médian (12) étant délimité par et comprenant l'axe de référence (Oz) et étant situé vers l'arrière du véhicule lorsque la vitre (5) est assemblée sur le véhicule.

4. Vitre selon la revendication 3, dans laquelle le gabarit est un cône (13).

5. Vitre selon la revendication 3 ou 4, dans laquelle l'axe de gabarit (Δ) est confondu avec l'axe de référence (Oz).

6. Vitre selon l'une quelconque des revendications 1 à 5, comprenant une portion secondaire (25) de raccordement en continuité de tangence avec la portion principale (24) et dans laquelle la portion secondaire (25) de raccordement présente une inclinaison par rapport à la verticale, supérieure à un seuil.

7. Planche de bord (2) de véhicule automobile équipée d'une vitre (5) selon l'une quelconque des revendications 1 à 5, et d'une visière (3) située au moins en partie au dessus de la vitre (5), dans laquelle les sections elliptiques (28a, 29a) présentent chacune un second foyer (F2, F'2) situé sur une surface inférieure de la visière (3).

8. Planche de bord (2) de véhicule automobile équipée d'une vitre (5) selon l'une quelconque des revendications 1 à 5 et d'une visière (3) située au moins en partie au dessus de la vitre (5), dans laquelle les sections elliptiques (28a, 29a) présentent chacune un second foyer (F2, F'2) situé à la hauteur d'un bord extrême médian (8) de la visière (3) et radialement plus éloigné de l'axe de référence (Oz) que ledit bord extrême médian (8).

9. Procédé de définition d'un galbe de vitre (5) de planche de bord (2) de véhicule automobile, **caractérisé par le fait qu'**il comprend une étape de construction d'une famille d'ellipses (22, 23) dans des plans verticaux (26, 27) contenant un point haut d'observation (O) du conducteur, chacune des ellipses (22, 23) ayant le point haut d'observation (O) comme foyer (F1) et une étape de raccordement surfacique des portions elliptiques (28a, 29a) de chacune des ellipses (22, 23).

10. Procédé selon la revendication 9, pour adapter la vitre (5) à une visière donnée (3) de planche de bord (2), dans lequel l'étape de construction de la famille d'ellipses (22, 23) comprend une étape de définition d'un gabarit (13) global de la famille d'ellipses sur lequel chaque ellipse (22, 23) est tangente, et une étape de positionnement des seconds foyers (F2, F'2) de chaque ellipse (22, 23) sur une surface inférieure de ladite visière (3).

## Claims

1. Curved glass (5) for a motor vehicle dashboard (2) comprising a means for positioning the glass with respect to the dashboard (2) of the vehicle and with respect to a reference point (0) representative of a high observation point, a reference axis (Oz), intended to be vertical when the glass (5) has been fitted onto the vehicle, containing the reference point (O), **characterized in that** it comprises a main portion (24) having partially elliptical sections (28a, 29a) in vertical section planes (26, 27) containing the reference axis (Oz), each of the elliptical sections (28a, 29a) having a first focus (F₁) located at the reference point (0) of the glass (5).

2. Glass according to Claim 1, in which the normals (11) to the surface of the main portion (24) on the passenger compartment side are oriented laterally with respect to the section plane (26) toward a median front half-plane (xOz), the median front half-plane being bounded by and containing the reference axis (Oz) and being located toward the front of the vehicle when the glass (5) has been fitted onto the vehicle.

3. Glass according to Claim 1 or 2, in which the elliptical sections (28a, 29a) are each tangential to a template (13) having a surface of revolution about a template axis (Δ), parallel to the reference axis (Oz) and located in a median rear half-plane (12), the median rear half-plane (12) being bounded by and containing the reference axis (Oz) and being located toward the rear of the vehicle when the glass (5) has been fitted onto the vehicle.

4. Glass according to Claim 3, in which the template is a cone (13).

5. Glass according to Claim 3 or 4, in which the template axis (Δ) is coincident with the reference axis (Oz).

6. Glass according to any one of Claims 1 to 5, comprising an adjoining secondary portion (25) tangentially continuous with the main portion (24) and in which the adjoining secondary portion (25) is inclined at an angle to the vertical greater than a threshold.

7. Motor vehicle dashboard (2) provided with a glass (5) according to any one of Claims 1 to 5 and with a visor (3) at least partly located above the glass (5), in which the elliptical sections (28a, 29a) each have a second focus (F₂, F'₂) located on an undersurface of the visor (3).

8. Motor vehicle dashboard (2) provided with a glass (5) according to any one of Claims 1 to 5 and with a visor (3) at least partly located above the glass (5), in which the elliptical sections (28a, 29a) each have a second focus (F₂, F'₂) located at the height of a median extreme edge (8) of the visor (3) and radially further away from the reference axis (Oz) than said median extreme edge (8).

9. Method of defining a curve for a motor vehicle dashboard (2) glass (5), **characterized in that** it comprises a step of constructing a family of ellipses (22, 23) in vertical planes (26, 27) containing a high observation point (0) of the driver, each of the ellipses (22, 23) having the high observation point (0) as focus (F₁) and a step of joining the surfaces of the elliptical portions (28a, 29a) of each of the ellipses (22, 23).

10. Method according to Claim 9, for adapting the glass (5) to a given visor (3) of a dashboard (2), in which the step of constructing the family of ellipses (22, 23) comprises a step of defining an overall template (13) of the family of ellipses, to which template each ellipse (22, 23) is tangential, and a step of positioning the second foci (F₂, F'₂) of each ellipse (22, 23) on an undersurface of said visor (3).

## Patentansprüche

1. Gewölbte Scheibe (5) für Kraftfahrzeug-Armaturenbrett (2), mit einem Mittel zum Positionieren der Scheibe in Bezug auf das Armaturenbrett (2) des Fahrzeugs und in Bezug auf einen Bezugspunkt (O), der einen oberen Beobachtungspunkt repräsentiert, wobei eine Bezugsachse (Oz) dazu bestimmt ist, vertikal zu sein, wenn die Scheibe (5) am Fahrzeug angebracht ist, und den Bezugspunkt (0) enthält, **dadurch gekennzeichnet, dass** sie einen Hauptabschnitt (24) aufweist, der in vertikalen Schnittebenen (26, 27), die die Bezugsachse (Oz) enthalten, teilweise elliptische Abschnitte (28a, 29a) aufweist, wobei jeder der elliptischen Abschnitte (28a, 29a) einen ersten Brennpunkt (F1) besitzt, der sich am Bezugspunkt (0) der Scheibe (5) befindet.

2. Scheibe nach Anspruch 1, wobei die Normalen (11) zur Oberfläche des Hauptabschnitts (24) auf Seiten des Fahrgastraums seitlich in Bezug auf die Schnittebene (26) zu einer vorderen Medianhalbebene (xOz) orientiert sind, wobei die vordere Medianhalbebene durch die Bezugsachse (Oz) begrenzt ist und diese enthält und sich im vorderen Teil des Fahrzeugs befindet, wenn die Scheibe (5) am Fahrzeug angebracht ist.

3. Scheibe nach Anspruch 1 oder 2, wobei die elliptischen Abschnitte (28a, 29a) jeweils zu einer Schablone (13) tangential sind, die eine rotationssymmetrische Oberfläche um eine Achse der Schablone (Δ) aufweist, die zu der Bezugsachse (Oz) parallel ist und sich in einer hinteren Medianhalbebene (12) befindet, wobei die hintere Medianhalbebene (12) durch die Bezugsachse (Oz) begrenzt ist und diese enthält und sich im hinteren Teil des Fahrzeugs befindet, wenn die Scheibe (5) am Fahrzeug angebracht ist.

4. Scheibe nach Anspruch 3, wobei die Schablone ein Konus (13) ist.

5. Scheibe nach Anspruch 3 oder 4, wobei die Schablonenachse (Δ) mit der Bezugsachse (Oz) zusammenfällt.

6. Scheibe nach einem der Ansprüche 1 bis 5, die einen sekundären Verbindungsabschnitt (25) aufweist, der den Hauptabschnitt (24) tangential fortsetzt, wobei der sekundäre Verbindungsabschnitt (25) in Bezug auf die Vertikale eine Neigung aufweist, die größer als ein Schwellenwert ist.

7. Kraftfahrzeugarmaturenbrett (2), das mit einer Scheibe (5) nach einem der Ansprüche 1 bis 5 und mit einer Abschirmung (3), die sich wenigstens teilweise oberhalb der Scheibe (5) befindet, ausgerüstet ist, in der die elliptischen Abschnitte (28a, 29a) jeweils einen zweiten Brennpunkt (F2, F'2) aufweisen, die sich auf einer unteren Oberfläche der Abschirmung (3) befinden.

8. Kraftfahrzeugarmaturenbrett (2), das mit einer Scheibe (5) nach einem der Ansprüche 1 bis 5 und mit einer Abschirmung (3), die sich wenigstens teilweise oberhalb der Scheibe (5) befindet, ausgerüstet ist, in der die elliptischen Abschnitte (28a, 29a) jeweils einen zweiten Brennpunkt (F2, F'2) aufweisen, der sich auf Höhe eines mittleren Außenrandes (8) der Abschirmung (3) befindet und von der Bezugsachse (Oz) radial weiter entfernt ist als der mittlere Außenrand (8).

9. Verfahren zum Definieren einer Scheibenwölbung (5) eines Kraftfahrzeugarmaturenbretts (2), **dadurch gekennzeichnet, dass** es einen Schritt des Konstruierens einer Familie von Ellipsen (22, 23) in vertikalen Ebenen (26, 27), die einen oberen Beobachtungspunkt (0) des Fahrers enthalten, wobei jede der Ellipsen (22, 23) den oberen Beobachtungspunkt (0) als Brennpunkt (F1) besitzt, und einen Schritt des Verbindens der elliptischen Abschnitte (28a, 29a) jeder der Ellipsen (22, 23) an der Oberfläche enthält.

10. Verfahren nach Anspruch 9, um die Scheibe (5) an eine gegebene Abschirmung (3) eines Armaturenbretts (2) anzupassen, in dem der Schritt des Konstruierens der Familie von Ellipsen (22, 23) einen Schritt des Definierens einer globalen Schablone (13) der Familie von Ellipsen, wobei jede Ellipse (22, 23) tangential ist, und einen Schritt des Positionierens zweiter Brennpunkte (F2, F'2) jeder Ellipse (22, 23) auf einer unteren Oberfläche der Abschirmung (3) enthält.
